# EUROPÄISCHE PATENTANMELDUNG

(11) **EP 4 671 693 A1**
(43) Veröffentlichungstag der Anmeldung: **31.12.2025**
(21) Anmeldenummer: 25180476.1
(22) Anmeldetag: 03.06.2025
(51) Int. Cl.: G01D 5/14, G01D 5/347, F04B 1/00

(54) **VORRICHTUNG ZUR WINKELMESSUNG UND HYDRAULIKMOTOR, ELEKTRO-HYDRAULISCHER AKTUATOR ODER HYDRAULIKPUMPE MIT EINER SOLCHEN VORRICHTUNG**

(30) Priorität: 25.06.2024 DE 102024117829
(71) Anmelder: Liebherr-Aerospace Lindenberg GmbH, 88161 Lindenberg (DE)
(72) Erfinder: STEINBAUER, Timo, 88161 Lindenberg (DE)
(74) Vertreter: Lorenz Seidler Gossel Part. mbB

(57) **Zusammenfassung**

Die Erfindung betrifft eine Vorrichtung zur Winkelmessung, umfassend einen Sensorgeber zum drehfesten Verbinden mit einer Welle, deren Drehwinkel zu bestimmen ist, und zum Abgeben eines Sensorsignals, und einen Messaufnehmer zum Aufnehmen und Verarbeiten des Sensorsignals. Die Vorrichtung ist dadurch gekennzeichnet, dass der Sensorgeber dazu ausgelegt ist, das Sensorsignal in Axialrichtung der Welle abzugeben, und der Messaufnehmer in Axialrichtung der Welle beabstandet zu dem Sensorgeber angeordnet ist, um das Anordnen eines Trennmediums, das für das Sensorsignal durchlässig ist, zwischen Sensorgeber und Messaufnehmer zu ermöglichen.

## Beschreibung

Die vorliegende Erfindung betrifft eine Vorrichtung zur Winkelmessung und einen Hydraulikmotor, einen elektro-hydraulischen Aktuator oder eine Hydraulikpumpe mit einer solchen Vorrichtung.

Vorrichtungen zur Winkelmessung sind in vielen Anwendungen unerlässlich, da beispielsweise der Drehwinkel bestimmter Motorkomponenten zueinander die aktuelle Leistung eines Motors bestimmen kann, sodass es von Vorteil ist, diesen Drehwinkel exakt zu kennen und regeln zu können.

So verhält es sich auch bei einem Hydraulikmotor mit einer variablen Verdrängung, bei dem beispielsweise ein Winkelsensor zur Messung eines Taumelscheibenwinkels erforderlich ist, um die Stellung der Taumelscheibe und der mit der Stellung der Taumelscheibe variierbaren Verdrängung bestimmen zu können. Zudem ist es bei einem Hydraulikmotor mit variabler Verdrängung ebenfalls von Vorteil, wenn der Motorwinkel bekannt ist.

Ähnliches gilt für eine Axialkolbenpumpe, die in ihrer Struktur große Ähnlichkeiten zu einem Hydraulikmotor mit variabler Verdrängung besitzt. Auch hier ist für die variable Pumpleistung die Kenntnis über die exakte Winkelposition der Taumelscheibe (auch genannt: Schrägscheibe) erforderlich, da eine Winkelveränderung der Taumelscheibe unmittelbar zu einem Verändern der ausgegebenen Menge an Pumpfluid führt.

Dabei ist es sehr herausfordernd die Winkelstellung des Motors wie auch der Taumelscheibe zu erfassen, da sowohl der Motor als auch die Taumelscheibe in einem hydraulisch bedruckten Bereich angeordnet sind, in welchem das Hydraulikfluid strömt. Es ist demnach ein Winkelsensor vorzusehen, der mit seinem Erfassungsabschnitt zum Bestimmen des Winkels von Taumelscheibe und Motor in dem Hydraulikfluid angeordnet ist, wohingegen die nachgelagerte Elektronik, die die Information über den gemessenen Winkel verwertet, in einem "trockenen" Abschnitt angeordnet ist, der frei von Hydraulikfluid ist.

Nach dem Stand der Technik werden daher die zur Elektronik führenden Leitungen des Winkelsensors durch ein Trennmedium hindurchgeführt, welches die "trockene" Seite (frei von Hydraulikfluid) von der "nassen" Seite (in welcher Hydraulikfluid strömt) trennt. Dabei ist es also erforderlich, dass die Durchführungen der Leitungen entsprechend abgedichtet werden, was hinsichtlich einer gewünschten langen Lebensdauer sowie in Bezug auf minimale Kosten nachteilhaft ist.

Es ist die Aufgabe der vorliegenden Erfindung die obenstehenden Nachteile zu überwinden oder zumindest abzumildern, um eine kostengünstige, einfache und robuste Lösung zu schaffen.

Dies gelingt mit einer Vorrichtung, die sämtliche Merkmale nach dem Anspruch 1 aufweist. Ein entsprechend fortgebildeter Hydraulikmotor, elektrohydraulischer Aktuator oder eine entsprechend fortgebildete Hydraulikpumpe sind dabei neben vorteilhaften Ausgestaltungen der vorliegenden Erfindung in den abhängigen Ansprüchen angegeben.

Nach der vorliegenden Erfindung ist demnach vorgesehen, dass eine erfindungsgemäße Vorrichtung zur Winkelmessung einen Sensorgeber zum drehfesten Verbinden mit einer Welle, deren Drehwinkel zu bestimmen ist, und zum Abgeben eines Sensorsignals, und einen Messaufnehmer zum Aufnehmen und Verarbeiten des Sensorsignals umfasst. Die Vorrichtung ist dadurch gekennzeichnet, dass der Sensorgeber dazu ausgelegt ist, das Sensorsignal in Axialrichtung der Welle abzugeben, und der Messaufnehmer in Axialrichtung der Welle beabstandet zu dem Sensorgeber angeordnet ist, um das Anordnen eines Trennmediums, das für das Sensorsignal durchlässig ist, zwischen Sensorgeber und Messaufnehmer zu ermöglichen.

Durch das Abgeben des Sensorsignals in Axialrichtung der Welle sowie der in Axialrichtung der Welle beabstandet angeordnete Messaufnehmer, kann zwischen Sensorgeber und Messaufnehmer das Trennmedium angeordnet sein. Das Trennmedium ist dabei nicht einer besonderen Ausgestaltung unterworfen, sondern kann flach, beispielsweise wandartig ausgestaltet sein, da der Sensorgeber das Sensorsignal in Axialrichtung hin zum beabstandet angeordneten Messaufnehmer abgibt. Zwischen Messaufnehmer und Sensorgeber kann dann ein als Trennwand ausgebildetes Trennmedium vorgesehen sein, wodurch eine Anordnung des Messaufnehmers in einem fluidisch vom Sensorgeber getrennten Bereich auf einfache Art und Weise erfolgen kann. Demnach kann am Beispiel eines Hydraulikmotors der Sensorgeber beispielsweise in dem mit Hydraulikfluid bedruckten Bereich angeordnet sein, wohingegen der Messaufnehmer in einem hydraulisch nicht-bedruckten Bereich vorgesehen sein kann. Das vormalige Durchführen von Elektronikleitungen auf die "trockene" Seite durch eine Trennwand oder dergleichen sowie die damit einhergehende aufwändige Abdichtung der Durchführung kann demnach entfallen, da das Trennmedium, beispielsweise in Form einer Trennwand, nach der vorliegenden Erfindung keine Durchführung mehr vorsehen muss. Dies ist dadurch bedingt, da das Trennmedium für das vom Sensorgeber abgegebene Sensorsignal durchlässig ist und die Aufnahme und die Weiterverarbeitung des Sensorsignals auf der anderen Seite des Trennmediums durch den Messaufnehmer erfolgt, sodass die vom Messaufnehmer abgehenden Elektronikleitungen hin zu einer nachgeschalteten Elektronik bereits auf der "trockenen" Seite beginnen. Lediglich der Sensorgeber ist dabei auf der "nassen" Seite angeordnet, wobei aber der Übertritt der Sensorsignale von der "nassen" Seite auf die "trockene" Seite durch das für das Sensorsignal durchlässige Trennmedium erfolgt.

Nach einer optionalen Fortbildung der vorliegenden Erfindung kann dabei vorgesehen sein, dass der Messaufnehmer dazu ausgelegt ist, das Aufnehmen des Sensorsignals berührungslos auszuführen.

Dies ermöglicht das Vorsehen eines Trennmediums bzw. einer Trennwand durch ein festes, starres Material, beispielsweise Aluminium, Titan oder einen entsprechend ausgebildeten Kunststoff.

Nach einer weiteren vorteilhaften Modifikation der vorliegenden Erfindung kann vorgesehen sein, dass das Sensorsignal ein magnetisches Signal ist und/oder das Trennmedium ein nicht-ferromagnetisches Material, insbesondere ein Kunststoff Titan oder ein Aluminium, ist.

Ein magnetisches Sensorsignal ist von Vorteil, da der Sensorgeber auf einfache Art und Weise mit einem Permanentmagneten versehen werden kann, sodass auf Seite des Messaufnehmers die Drehposition durch Erfassen des vom Permanentmagnet abgegebenen Magnetfelds bestimmbar ist. Hierbei bietet sich dann an, dass das Trennmedium aus einem nicht-ferromagnetischen Material ist, um die vom Sensorgeber abgegebenen Magnetsignale nicht zu beeinträchtigen. Eine beispielhafte Verkörperung für ein solches Material ist Aluminium, Titan oder Kunststoff, die bekanntermaßen die Magnetfeldlinien eines Magnetfelds nicht beeinträchtigen. Das Trennmedium wird dabei in die in Axialrichtung bestehende Lücke zwischen Sensorgeber und Messaufnehmer eingefügt, sodass der Sensorgeber auf der einen Seite des Trennmediums und der Messaufnehmer auf der anderen Seite des Trennmediums angeordnet sind. Ein direkter Kontakt zwischen Sensorgeber und Messaufnehmer existiert daher nicht, was das Einziehen des Trennmediums zwischen diesen beiden Komponenten ermöglicht.

Nach einer weiteren optionalen Fortbildung der vorliegenden Erfindung kann vorgesehen sein, dass der Messaufnehmer dazu ausgelegt ist, die Winkellage des Sensorgebers mithilfe des Sensorsignals zu erfassen.

Der Messaufnehmer ist dazu ausgelegt, die Drehposition des Sensorgebers über das von dem Sensorgeber abgegebene Sensorsignal bestimmen zu können. Beispielsweise enthält der Messaufnehmer eine Auswerteelektronik, die es ihm ermöglicht, in Abhängigkeit eines empfangenen Magnetsignals auf eine Drehposition des Sensorgebers zu schließen. Da der Sensorgeber drehfest mit einer Welle verbunden ist, deren Drehwinkel zu bestimmen ist, kann die so bestimmte Winkellage des Sensorgebers mit der der Welle gleichgesetzt werden.

Vorteilhafterweise kann nach einer Fortbildung der vorliegenden Erfindung vorgesehen sein, dass der Abstand zwischen Sensorgeber und Messaufnehmer in Axialrichtung mehr als 2 mm, vorzugsweise mehr als 4 mm bevorzugterweise mehr als 8 mm beträgt.

Ein minimaler Abstand zwischen Sensorgeber und Messaufnehmer ist für die stabile Ausgestaltung des zwischen Messaufnehmer und Sensorgebers anzuordnenden Trennmediums von Vorteil, insbesondere wenn unterschiedliche Druckverhältnisse auf den unterschiedlichen Seiten des Trennmediums vorherrschen.

Vorteilhafterweise ist nach der vorliegenden Erfindung vorgesehen, dass der Abstand zwischen Sensorgeber und Messaufnehmer in Axialrichtung weniger als 40 mm, vorzugsweise weniger als 20 mm und bevorzugterweise weniger als 9 mm beträgt.

Ein zu hoher Abstand hingegen verringert die am Messaufnehmer ankommende Signalqualität des Sensorsignals, sodass es von Vorteil ist, den Abstand zwischen Sensorgeber und Messaufnehmer zu beschränken.

Nach einer weiteren optionalen Modifikation der vorliegenden Erfindung kann vorgesehen sein, dass der Messaufnehmer dazu ausgelegt ist, das vom Sensorgeber aufgenommene Sensorsignal in ein elektrisches Signal umzuwandeln.

Das elektrische Signal kann dann auf einfache Art und Weise über eine Leitung an eine nachgeschaltete Steuerkomponente weitergegeben werden. Es ist nicht mehr notwendig, eine elektrische Leitung durch ein Trennmedium hindurchzuführen und dabei die Leitung in dem Trennmedium entsprechend abzudichten. Die Anordnung des Trennmediums zwischen dem Sensorgeber und dem Messaufnehmer, wobei das Sensorsignal in Axialrichtung zu der Welle, deren Drehwinkel zu bestimmen ist, abgegeben wird, ermöglicht eine einfache Umsetzung des Trennmediums, beispielsweise als flache, ebene Trennwand. Eine komplizierte Form des Trennmediums ist nach der vorliegenden Erfindung ebenso wenig notwendig wie das Durchführen einer elektronischen Leitung durch diese.

Nach einer weiteren vorteilhaften Fortbildung der vorliegenden Erfindung kann vorgesehen sein, dass das vom Sensorgeber ausgegebene Sensorsignal ein magnetisches Signal, ein optisches Signal, ein elektrisches Signal, ein akustisches Signal und/oder ein mechanisches Signal ist.

Dem Fachmann ist klar, dass die vorliegende Erfindung nicht auf ein magnetisches Sensorsignal beschränkt ist, da ebenso optische Sensorsignale in Verbund mit einem für optische Signale durchlässigen Trennmedium oder dergleichen denkbar sind.

Es kommt lediglich darauf an, dass das Sensorsignal durch das Trennmedium hindurchtreten kann, sodass ein auf einer Seite des Trennmediums abgegebenes Sensorsignal auf der anderen Seite des Trennmediums durch den Messaufnehmer aufgenommen und ausgewertet werden kann. Das Trennmedium und das Sensorsignal der erfindungsgemäßen Vorrichtung sind dabei aufeinander abzustimmen.

Nach der vorliegenden Erfindung kann vorgesehen sein, dass das vom Sensorgeber abgegebene Sensorsignal mit einem Drehwinkel des Sensorgebers korreliert.

Ferner kann vorgesehen sein, dass die Vorrichtung zur Winkelmessung einen rotierenden Sensorteil mit dem Sensorgeber sowie einen statischen Sensorteil umfassend den Messaufnehmer besitzt. Der rotierende Teil ist von dem statischen Teil durch das Anordnen des Trennmediums voneinander getrennt.

Die Erfindung betrifft zudem einen Hydraulikmotor, einen elektro-hydraulischen Aktuator oder eine Hydraulikpumpe mit einer Vorrichtung nach einer der vorhergehend diskutierten Ausgestaltungen und umfasst dabei einen hydraulisch bedruckten Bereich, in welchem das Hydraulikmedium strömt ("nasser" Bereich), und einen hydraulisch nicht-bedruckten Bereich, der frei von dem Hydraulikmedium ist ("trockener" Bereich), wobei der Sensorgeber in dem hydraulisch bedruckten Bereich und der Messaufnehmer in dem hydraulisch nicht-bedruckten Bereich angeordnet sind.

Die Trennung zwischen den unterschiedlichen Bereichen erfolgt dabei durch das Trennmedium. Dieses dient also dazu, den bedruckten Bereich von dem nicht-bedruckten Bereich zu trennen, lässt aber das Sensorsignal zumindest teilweise passieren.

Ferner kann nach einer vorteilhaften Modifikation dabei vorgesehen sein, dass das für das Sensorsignal durchlässige Trennmedium gleichzeitig auch zum Trennen des hydraulisch bedruckten Bereichs von dem hydraulisch nicht-bedruckten Bereich dient.

Vorteilhafterweise kann bei der Ausgestaltung eines Hydraulikmotors oder einer Hydraulikpumpe vorgesehen sein, dass die Welle, deren Drehwinkel zu bestimmen ist, mit einer Taumelscheibe des Hydraulikmotors oder der Hydraulikpumpe drehfest verbunden ist oder durch die Taumelscheibe verkörpert ist, um den Taumelscheibenwinkel zu bestimmen.

Wie bereits eingangs erwähnt ist die Winkelstellung der Taumelscheibe bei einem Hydraulikmotor bzw. einer Hydraulikpumpe von großer Wichtigkeit, da diese einen unmittelbaren Einfluss auf das Hubvolumen des Motors bzw. der Pumpe besitzt. Schließlich führt eine vergrößerte Schrägstellung der Taumelscheibe dazu, dass das Hubvolumen steigt, wohingegen eine verringerte Schrägstellung der Taumelscheibe zu einer Verringerung des Hubvolumens führt. Am Beispiel einer Pumpe wird also durch das Vergrößern des Hubvolumens ein größeres Pumpvolumen ausgegeben, ein Verringern führt hingegen zu einer Verminderung des Pumpvolumens.

Nach einer weiteren vorteilhaften Modifikation eines Hydraulikmotors bzw. einer Hydraulikpumpe kann dabei vorgesehen sein, dass die Welle, deren Drehwinkel zu bestimmen ist, mit dem Motor bzw. der Pumpeneinheit drehfest verbunden ist oder durch den Motor bzw. der Pumpe verkörpert ist, um den Motorwinkel bzw. den Winkel der Pumpeneinheit zu bestimmen.

Nach einer optionalen Modifikation der vorliegenden Erfindung kann vorgesehen sein, dass der Hydraulikmotor ein Motor mit variabler Verdrängung ist bzw. die Hydraulikpumpe eine Pumpe mit variabler Verdrängung ist.

Die Erfindung betrifft zudem einen elektromechanischen Aktuator mit einer Vorrichtung nach einem der vorhergehend diskutierten Ausgestaltungen, wobei der Sensorgeber mit dem Motor und der Messaufnehmer mit einer Kugelrollspindel verbunden ist oder umgekehrt, um eine Winkelmessung zwischen Motor und Kugelrollspindel zu ermöglichen.

Weitere Merkmale, Einzelheiten und Vorteile der Erfindung werden anhand der nachfolgenden Figurenbeschreibung ersichtlich. Dabei zeigt:

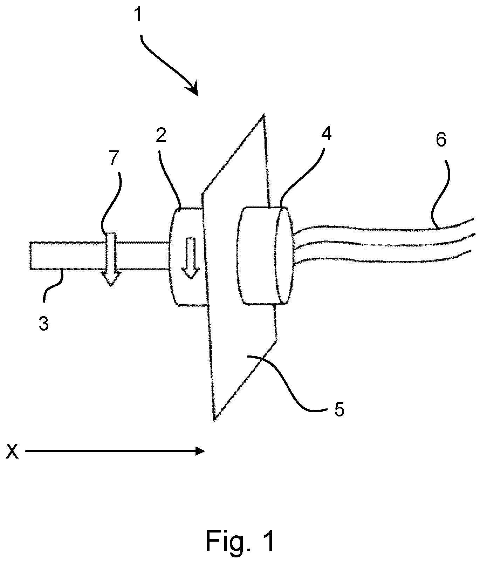

- Fig. 1:: eine schematische Darstellung einer erfindungsgemäßen Vorrichtung zur Winkelmessung.

Fig. 1 zeigt eine schematische Darstellung der erfindungsgemäßen Vorrichtung 1.

Man erkennt eine Welle 3, deren Drehwinkel zu bestimmen ist. Dabei ist an einem distalen Ende der Welle 3 ein Sensorgeber 2 fest mit der Welle 3 verbunden, insbesondere drehfest, sodass bei einer Drehung der Welle 3 der Sensorgeber 2 eine identische Drehung ausführt. Die Drehung der Welle 3 ist dabei in Fig. 1 durch den Drehrichtungspfeil 7 angedeutet. Der drehfest mit der Welle 3 verbundene Sensorgeber 2 dreht sich in identischer Weise, was durch den parallelen weiteren Drehrichtungspfeil (ohne Bezugszeichen) angedeutet ist.

Der Sensorgeber 2 gibt dabei ein in Axialrichtung X gerichtetes Sensorsignal (nicht dargestellt) aus, was von einem in Axialrichtung X zum Sensorgeber beabstandet angeordneten Messaufnehmer 4 aufgenommen wird. Der Messaufnehmer 4 wandelt das aufgenommene Sensorsignal in ein elektrisches Signal um und gibt dieses an eine nachgeschaltete Steuerkomponente über eine elektrische Leitung 6 weiter. Dem Fachmann ist aber klar, dass die elektrische Leitung aus mehreren einzelnen Adern bestehen kann, oder gar mehrere elektrische Verbindungen umfassen kann.

Da der Sensorgeber 2 gegenüber dem Messaufnehmer 4 in Axialrichtung X beabstandet ist, kann ein Trennmedium 5 in diesem Spalt eingeführt werden. Die Funktionalität der Vorrichtung wird durch das Einfügen des Trennmediums 5 nicht beeinträchtigt, da das Trennmedium 5 für das vom Sensorgeber 2 ausgegebene Sensorsignal durchlässig ist. In anderen Worten kann zwar eine bestimmte Beeinträchtigung durch das Vorhandensein des Trennmediums 5 zwischen dem Sensorgeber 2 und dem Messaufnehmer 4 erfolgen, beispielsweise kann eine Amplitude eines vom Sensorgeber 2 ausgegebenen Sensorsignals oder deren Form um einen geringen Betrag vermindert bzw. verändert werden, die grundsätzliche Funktionalität wird jedoch nicht beeinträchtigt. Durch das Anordnen des Messaufnehmers 4 in Axialrichtung versetzt zu dem Sensorgeber 2 entsteht ein Spalt, der durch ein als Wand ausgebildetes Trennmedium 5 ausgefüllt werden kann. Eine komplizierte Ausgestaltung des Trennmediums 5 ist daher nicht erforderlich, sodass es möglich ist, den Sensorgeber 2 und den Messaufnehmer 4 auf einfache Art und Weise voneinander fluidisch zu trennen. In einem Beispiel ist das Sensorsignal ein Magnetsignal, das von einem Permanentmagneten des Sensorgebers 2 abgegeben wird und einen Rückschluss auf die Drehposition der Welle 3 erlaubt. In einem solchen Fall muss das Trennmedium 5 die vom Permanentmagneten des Sensorgebers 2 abgehenden Magnetfeldlinien hindurchtreten lassen, damit das magnetische Sensorsignal des Signalgebers 2 von dem Messaufnehmer 4 an der anderen Seite des Trennmediums 5 aufgenommen und entsprechend ausgewertet werden kann.

Hierbei ist das Trennmedium am besten ein nicht-ferromagnetisches Material, beispielsweise Aluminium, Titan oder Kunststoff, welches die magnetischen Feldlinien des Permanentmagneten des Sensorgebers 2 nicht (wesentlich) beeinträchtigt.

Am Beispiel eines Hydraulikmotors mit variabler Verdrängung werden die erreichbaren Vorteile der erfindungsgemäßen Vorrichtung besonders gut ersichtlich, da es dort für die Bestimmung der variablen Verdrängung erforderlich ist, beispielsweise den Winkel der Taumelscheibe (oder auch den Motorwinkel) zu kennen.

Hier ist es nun möglich, den Sensorgeber 2 mit der Taumelscheibe oder einer davon abgehenden Welle 3 zu verbinden, wobei die Taumelscheibe oder die davon abgehende Welle sich in einem Bereich des Motors befindet, in dem Hydraulikfluid vorhanden ist und in der Regel auch bedruckt ist. Dieser "nasse" Motorbereich ist in der Regel über eine Trennwand von einem "trockenen" Motorbereich getrennt, in dem kein Hydraulikfluid vorhanden ist. In dem "trockenen" Motorbereich sind in der Regel die Elektronikkomponenten zum Ansteuern und Auswerten des Hydraulikmotors angeordnet.

Durch den in Axialrichtung vorgesehenen Versatz des Messaufnehmers 4 gegenüber dem Sensorgeber 2 kann eine eben oder flach ausgestaltete Trennwand als Trennmedium 5 fungieren, bei der auf der nassen Seite des Sensorgeber 2 und auf der trockenen Seite der Messaufnehmer 4 angeordnet sind. Ist die Trennwand dann aus einem solchen Material gefertigt, welches einen Durchtritt des vom Sensorgeber 2 abgegebenen Sensorsignals sind zum Sensorgeber 4 ermöglicht, kann ohne viel Aufwand eine Vorrichtung zur Winkelmessung in einem Hydraulikmotor integriert werden, der in Bezug auf seine Lebensdauer und seine Kosten optimiert ist. Nimmt man für das vorliegende Beispiel weiterhin an, dass das Sendesignal ein Magnetsignal ist, bietet es sich beispielhaft an, dass die Trennwand aus Aluminium, Titan oder einem Kunststoff besteht. Diese Materialien beeinträchtigen das magnetische Sendesignal nicht oder nur unwesentlich, sodass eine ungestörte Aufnahme und Weiterverarbeitung durch den Messaufnehmer 4 gewährleistet ist

Dem Fachmann ist klar, dass es neben dem vorstehend beschriebenen Einsatz der erfindungsgemäßen Vorrichtung auch vorteilhaft ist, die erfindungsgemäße Vorrichtung in einer Hydraulikpumpe, einem elektro-hydraulischen Aktuator oder einem elektromechanischen Aktuator (dort zur Winkelbestimmung von Motor und Kugelrollspindel) einzusetzen.

### Bezugszeichenliste:

- 1: Vorrichtung
- 2: Sensorgeber
- 3: Welle
- 4: Messaufnehmer
- 5: Trennmedium
- 6: Leitungen
- 7: Drehrichtungspfeil
- X: Axialrichtung

## Patentansprüche

1. Vorrichtung (1) zur Winkelmessung, umfassend:
einen Sensorgeber (2) zum drehfesten Verbinden mit einer Welle (3), deren Drehwinkel zu bestimmen ist, und zum Abgeben eines Sensorsignals, und
einen Messaufnehmer (4) zum Aufnehmen und Verarbeiten des Sensorsignals,
**dadurch gekennzeichnet, dass**
der Sensorgeber (2) dazu ausgelegt ist, das Sensorsignal in Axialrichtung (X) der Welle (3) abzugeben, und
der Messaufnehmer (4) in Axialrichtung (X) der Welle (3) beabstandet zu dem Sensorgeber (2) angeordnet ist, um das Anordnen eines Trennmediums (5), das für das Sensorsignal durchlässig ist, zwischen Sensorgeber (2) und Messaufnehmer (4) zu ermöglichen.

2. Vorrichtung (1) nach Anspruch 1, wobei der Messaufnehmer (4) dazu ausgelegt ist, das Aufnehmen des Sensorsignals berührungslos auszuführen.

3. Vorrichtung (1) nach einem der vorhergehenden Ansprüche, wobei das Sensorsignal ein magnetisches Signal ist und/oder das Trennmedium (5) ein nicht-ferromagnetisches Material, insbesondere ein Kunststoff, Titan oder ein Aluminium, ist.

4. Vorrichtung (1) nach einem der vorhergehenden Ansprüche, wobei der Messaufnehmer (4) dazu ausgelegt ist, die Winkellage des Sensorgebers (2) mithilfe des Sensorsignals zu erfassen.

5. Vorrichtung (1) nach einem der vorhergehenden Ansprüche, wobei der Abstand zwischen Sensorgeber (2) und Messaufnehmer (4) in Axialrichtung (X) mehr als 2 mm, vorzugsweise mehr als 4 mm bevorzugterweise mehr als 8 mm beträgt.

6. Vorrichtung (1) nach einem der vorhergehenden Ansprüche, wobei der Abstand zwischen Sensorgeber (2) und Messaufnehmer (4) in Axialrichtung (X) weniger als 40 mm, vorzugsweise weniger als 20 mm und bevorzugterweise weniger als 9 mm beträgt.

7. Vorrichtung (1) nach einem der vorhergehenden Ansprüche, wobei der Messaufnehmer (4) dazu ausgelegt ist, das vom Sensorgeber (2) aufgenommene Sensorsignal in ein elektrisches Signal umzuwandeln.

8. Vorrichtung (1) nach einem der vorhergehenden Ansprüche, wobei das vom Sensorgeber (2) ausgegebene Sensorsignal ein magnetisches Signal, ein optisches Signal, ein elektrisches Signal, ein akustisches Signal und/oder ein mechanisches Signal ist.

9. Vorrichtung (1) nach einem der vorhergehenden Ansprüche, wobei das vom Sensorgeber (2) abgegebene Sensorsignal mit einem Drehwinkel des Sensorgebers (2) korreliert.

10. Hydraulikmotor, elektro-hydraulischer Aktuator oder Hydraulikpumpe mit einer Vorrichtung (1) nach einem der vorhergehenden Ansprüche, umfassend:
einen hydraulisch bedruckten Bereich, in welchem das Hydraulikmedium strömt, und
einen hydraulisch nicht-bedruckten Bereich, der frei von dem Hydraulikmedium ist, wobei
der Sensorgeber (2) in dem hydraulisch bedruckten Bereich und der Messaufnehmer (4) in dem hydraulisch nicht-bedruckten Bereich angeordnet sind.

11. Hydraulikmotor, elektro-hydraulischer Aktuator oder Hydraulikpumpe nach dem vorhergehenden Anspruch 10, wobei das für das Sensorsignal durchlässige Trennmedium (5) gleichzeitig auch zum Trennen des hydraulisch bedruckten Bereichs von dem hydraulisch nicht-bedruckten Bereich dient.

12. Hydraulikmotor nach einem der vorhergehenden Ansprüche 10 oder 11, wobei die Welle (3), deren Drehwinkel zu bestimmen ist, mit einer Taumelscheibe des Hydraulikmotors drehfest verbunden ist oder durch die Taumelscheibe verkörpert ist, um den Taumelscheibenwinkel zu bestimmen.

13. Hydraulikmotor nach einem der vorhergehenden Ansprüche 10 bis 12, wobei die Welle (3), deren Drehwinkel zu bestimmen ist, mit dem Motor drehfest verbunden ist oder durch den Motor verkörpert ist, um den Motorwinkel zu bestimmen.

14. Hydraulikmotor nach einem der vorhergehenden Ansprüche 10 bis 13, wobei der Hydraulikmotor ein Motor mit variabler Verdrängung ist.

15. Elektromechanischer Aktuator mit einer Vorrichtung (1) nach einem der vorhergehenden Ansprüche 1 bis 9, wobei der Sensorgeber (2) mit dem Motor und der Messaufnehmer (4) mit einer Kugelrollspindel verbunden ist oder umgekehrt, um eine Winkelmessung zwischen Motor und Kugelrollspindel zu ermöglichen.
